# EUROPÄISCHE PATENTSCHRIFT

(11) **EP 2 506 445 B1**
(45) Veröffentlichungstag und Bekanntmachung des Hinweises auf die Patenterteilung: **12.08.2015**
(21) Anmeldenummer: 11002673.9
(22) Anmeldetag: 31.03.2011
(51) Int. Cl.: H04B 3/54, G05B 15/02

(54) **Verbindungsgerät, System und Verfahren zur Signalübertragung zwischen einer Leitstelle und mindestens einem Feldgerät in einer industriellen Anlage**
Connection device, system and method for transmitting signals between a control centre and at least one field device in an industrial assembly
Appareil de liaison, système et procédé de transmission de signal entre un centre de contrôle et au moins un appareil de champ dans une installation industrielle

(43) Veröffentlichungstag der Anmeldung: 03.10.2012
(73) Patentinhaber: ABB Technology AG, 8050 Zürich (CH)
(72) Erfinder: Raabe, Falk, 69488 Birkenau (DE); Baumann, Jürgen, 68766 Hockenheim (DE); Orth, Jörg, 69126 Heidelberg (DE); Kania, Hubert, 64625 Bensheim (DE)

(56) Entgegenhaltungen:
- EP-A2- 1 416 645
- US-A1- 2005 129 097
- US-A1- 2008 205 450
- VON H. BEIKIRCH, M. VOSS: "CAN-transceiver for field bus powerline communications", IEEE INTERNATIONAL SYMPOSIUM ON POWER LINE COMMUNICATIONS AND ITS APPLICATIONS, [Online] 2000, Seiten 257-264, XP002660801, Gefunden im Internet: URL:http://www.isplc.org/docsearch/Proceed ings/2000/pdf/0629_001.pdf> [gefunden am 2011-10-06]
- BEIKIRCH H ET AL: "Powerline communications interface in csma/ca-networks", EMERGING TECHNOLOGIES AND FACTORY AUTOMATION, 2003. PROCEEDINGS. ETFA '03. IEEE CONFERENCE SEPT. 16-19, 2003, PISCATAWAY, NJ, USA,IEEE, Bd. 2, 16. September 2003 (2003-09-16), Seiten 117-120, XP010671009, DOI: 10.1109/ETFA.2003.1248679 ISBN: 978-0-7803-7937-4
- GRASSI F ET AL: "Assessment of CAN performance for Powerline Communications in dc differential buses", MICROWAVES, COMMUNICATIONS, ANTENNAS AND ELECTRONICS SYSTEMS, 2009. COMCAS 2009. IEEE INTERNATIONAL CONFERENCE ON, IEEE, PISCATAWAY, NJ, USA, 9. November 2009 (2009-11-09), Seiten 1-6, XP031614695, ISBN: 978-1-4244-3985-0
- WANG WEN-XING ET AL: "Design and Implementation of Communication Based on Multi-Carrier Modulation in Mine", MANAGEMENT AND SERVICE SCIENCE (MASS), 2010 INTERNATIONAL CONFERENCE ON, IEEE, PISCATAWAY, NJ, USA, 24. August 2010 (2010-08-24), Seiten 1-4, XP031757028, ISBN: 978-1-4244-5325-2
- Digi: "User Guide Digi One IA RealPort", , 1. Januar 2003 (2003-01-01), Seiten 1-34, XP002660802, Gefunden im Internet: URL:http://www.neteon.net/download/40/9000 0263_b.pdf [gefunden am 2011-10-07]

## Beschreibung

Die Erfindung betrifft ein Verbindungsgerät zur Anwendung in einer industriellen Anlage, welches an eine Energieversorgungsleitung anschließbar ist und über mindestens eine erste Industriebusschnittstelle zum Empfangen und/oder Versenden von mittels eines ersten Industriebusprotokolls übertragenen ersten Industriebus-Eingangsdaten bzw. -Ausgangsdaten verfügt. Des Weiteren betrifft die Erfindung ein System und ein Verfahren zur Signalübertragung zwischen einer Leitstelle und mindestens einem Feldgerät in einer industriellen Anlage, wobei das System eine Energieversorgungsleitung zur Versorgung des mindestens einen Feldgerätes mit elektrischer Energie umfasst.

In heutigen industriellen Anlagen, wie beispielweise Kraftwerken, Pumpstationen oder Energieverteilnetzen auf Mittelspannungsniveau zwischen 3.6 kV und 36 kV, ist mindestens eine Leitstelle vorhanden, welche mit diversen sogenannten Feldgeräten, wie Sensoren, Vorort-Bediengeräten, Fernbediengeräten oder Aktoren, insbesondere Motoren, Antrieben und Ventilen, kommuniziert und dabei Daten in Form von beispielsweise Steuerbefehlen sendet und Status- und Messinformationen empfängt. Die Kommunikation zwischen Leitstelle und Feldgeräten findet dabei über einen oder mehrere so genannte Industriebusse statt, d.h. über Datenkabel, bei denen die Informationen mittels eines Industriebusprotokolls übertragen werden. Ein Industriebus und das zugehörige Industriebusprotokoll sind speziell angepasst an die gegenüber Heim- oder Büroanwendungen verschärften Umgebungsbedingungen einer industriellen Anlage. Bei Industriebusprotokollen wird unterschieden nach der Komplexität des Busprotokolls, und zwar zwischen den hochkomplexen Steuerbusprotokolle, wie beispielsweise High Speed Ethernet und ControlNet, gefolgt von den so genannten Feldbusprotokollen, wie beispielweise Foundation Fieldbus, Profinet und Profibus, wiederum gefolgt von den Gerätebusprotokollen, wie beispielsweise DeviceNet, Profibus DP, SDS und Interbus-S, und zuletzt den einfachen Sensorbussen, wie beispielsweise CAN, ASI und LonWorks.

Neben dem Anschluss an ein oder mehrere der für die Buskommunikation erforderlichen Datenkabel, ist jedes Feldgerät darüber hinaus mit einer Energieversorgungsleitung verbunden. In industriellen Anlagen tritt nun das Problem auf, dass üblicherweise zwischen der Leitstelle und den Feldgeräten Entfernungen von mehreren Zehn bis mehreren Hundert Metern auftreten und dass die Anzahl der in einer solchen Anlage vorhandenen Feldgeräte beträchtlich ist. Dementsprechend erfordert die Verkabelung der Feldgeräte einen erheblichen Aufwand an Material, aber auch an Planungs- und Installationsarbeit.

Der grundsätzliche Gedanke, Energieversorgungsleitungen nicht nur zur Übertragung von Energie sondern gleichzeitig auch zur Datenübertragung zu verwenden, ist nicht neu und insbesondere aus den Bereichen der Heimelektronik, der Gebäudeautomatisierung und der Internetanbindung von Heim- oder Bürocomputern bekannt. Am bekanntesten ist dabei der so genannte Power-Line-Communication-Standard (PLC). Bei diesen Anwendungen werden die Daten mittels eines Trägerfrequenzverfahrens auf das Stromsignal einer Energieversorgungsleitung aufmoduliert und dann gemeinsam mit dem Stromsignal übertragen. Aus dem Bereich der industriellen Anwendungen sind dagegen bisher nur wenige Versuche bekannt geworden, Datenübertragungs- und Energieversorgungsleitungen zu kombinieren. So werden in dem Artikel von H. Beikirch and M. Voss, "CAN-transceiver for field bus powerline communications," IEEE International Symposium on Power Line Communications and its Applications, 2000, pp. 257-264, Möglichkeiten behandelt, den Sensorbus CAN für die Kommunikation per Energieversorgungsleitung zu nutzen. Aus "Applicability of power-line communications to data transfer of on-line condition monitoring of electrical drives" von Jero Ahola, ISBN 951-764-783-2, ist eine Anwendung bekannt, bei der Sensordaten zur Online-Überwachung von elektrischen Antrieben per Energieversorgungsleitung versendet werden.

In der US 2005/129097A1 wird ein Verfahren zur Datenübertragung über ein mehrphasiges Energieversorgungsnetz beschrieben, bei dem mehrere Trägerfrequenzen zur Datenübertragung per Powerline zum Einsatz kommen.

In Digi: "User Guide Digi One IA RealPort", XP-002660802, wird ein Gerät beschrieben, welches Daten zwischen einem seriellen Bus und Ethernet sowie in umgekehrter Richtung umsetzt, und dabei die seriellen Daten zur Ethernet-Übertragung "verkapselt". Das Gerät enthält einen einzigen seriellen Anschluss.

Des Weiteren gibt es auf dem Markt erhältliche spezielle Industriebuslösungen, bei denen sowohl die Datenübertragung als auch die Versorgung von Feldbusgeräten mit Energie über ein und dieselbe Art von Leitung erfolgt, wobei diese Leitung keine handelsübliche Versorgungsleitung ist, sondern im allgemeinen eine Zweidrahtleitung mit oder ohne zusätzliche Schirmung. Derartige spezielle Industriebuslösungen sind beispielweise bekannt als Profibus-PA oder Interbus-Loop.

Die Aufgabe der vorliegenden Erfindung besteht nun darin, ein Verbindungsgerät, ein System und ein Verfahren der eingangs genannten Art anzugeben, mit welchem der Verkabelungsaufwand von Feldgeräten in industriellen Anlagen reduziert werden kann, indem handelsübliche Energieversorgungsleitungen zur gleichzeitigen Übertragung von Daten genutzt werden.

Diese Aufgabe wird mit den Verbindungsgeräten nach einem der unabhängigen Ansprüche 1, 3, und 5 und den Verfahren nach einem der unabhängigen Ansprüche 13 und 14 gelöst.

Erfindungsgemäß weist das Verbindungsgerät, welches als Gerät zum Einkoppeln von Daten in eine Energieversorgungsleitung ausgelegt ist und deshalb über mindestens eine erste Industriebusschnittstelle verfügt zum Empfangen von mittels eines ersten Industriebusprotokolls übertragenen ersten Industriebus-Eingangsdaten, darüber hinaus folgende Elemente auf: Modulationsmittel zur Erzeugung von ersten Energiebus-Ausgangsdaten durch Aufmodulation der ersten Industriebus-Eingangsdaten auf ein Industrial-Ethernet-Protokoll und Energie-Kommunikationsmittel zum Versenden der ersten Energiebus-Ausgangsdaten auf der Energieversorgungsleitung mittels eines Trägerfrequenzverfahrens. Das Verbindungsgerät, welches als Gerät zum Auskoppeln von Daten in eine Energieversorgungsleitung ausgelegt ist und über mindestens eine erste Industriebusschnittstelle verfügt zum Versenden von mittels des ersten Industriebusprotokolls zu übertragenen ersten Industriebus-Ausgangsdaten, umfasst gemäß der Erfindung darüber hinaus Energie-Kommunikationsmittel zum Empfangen von auf das Industrial-Ethernet-Protokoll aufmodulierten und mittels des Trägerfrequenzverfahrens über die Energieversorgungsleitung übertragenen ersten Energiebus-Eingangsdaten und Demodulationsmittel zum Extrahieren der ersten Energiebus-Eingangsdaten aus dem Industrial-Ethernet-Protokoll und zur Erzeugung der ersten Industriebus-Ausgangsdaten. Die Erfindung sieht darüber hinaus ein Verbindungsgerät vor, welches Daten sowohl ein- als auch auskoppeln kann und deshalb sämtliche oben genannten Modulationsmittel, Demodulationsmittel und Energie-Kommunikationsmittel umfasst.

Das erfindungsgemäße System zur Signalübertragung zwischen einer Leitstelle und mindestens einem Feldgerät umfasst eine Energieversorgungsleitung zur Versorgung des mindestens einen Feldgerätes mit elektrischer Energie, ein zum Einkoppeln oder Ein- und Auskoppeln von Daten ausgelegtes erstes Verbindungsgerät, welches an die Energieversorgungsleitung angeschlossen ist und welches über mindestens einen ersten Leitstellen-Industriebus mit der Leitstelle verbunden ist, und ein zum Auskoppeln oder Ein- und Auskoppeln von Daten ausgelegtes zweites Verbindungsgerät, welches an die Energieversorgungsleitung angeschlossen ist und welches über mindestens einen ersten Feldgeräte-Industriebus mit dem mindestens einen Feldgerät verbunden ist.

Bei dem erfindungsgemäßen Verfahren zum Einkoppeln von Daten auf die Energieversorgungsleitung werden erste, mit dem ersten Industriebusprotokoll übertragene Industriebus-Eingangsdaten empfangen, erste Energiebus-Ausgangsdaten durch Aufmodulation der ersten Industriebus-Eingangsdaten auf das Industrial-Ethernet-Protokoll erzeugt, und diese ersten Energiebus-Ausgangsdaten auf der Energieversorgungsleitung mittels eines Trägerfrequenzverfahrens versendet. Zum Einkoppeln der Daten auf die Energieversorgungsleitung werden also nicht, wie bisher bekannt, die Industriebus-Eingangsdaten direkt per Trägerfrequenzverfahren auf das Stromsignal der Energieversorgungsleitung aufmoduliert, sondern es wird noch eine Industrial-Ethernet-Übertragungsebene dazwischengeschoben.

Das erfindungsgemäße Verfahren zum Auskoppeln von Daten von der Energieversorgungsleitung umfasst die Schritte, dass auf das Industrial-Ethernet-Protokoll aufmodulierte und mittels eines Trägerfrequenzverfahrens über die Energieversorgungsleitung übertragene erste Energiebus-Eingangsdaten empfangen werden, und dass die ersten Energiebus-Eingangsdaten aus dem Industrial-Ethernet-Protokoll extrahiert und in, mit dem ersten Industriebusprotokoll zu versendende, erste Industriebus-Ausgangsdaten umgewandelt und anschließend über einen Industriebus versendet werden. In einem Verbindungsgerät, welches Daten sowohl ein- als auch auskoppeln kann, finden die zugehörigen Verfahrensschritte parallel zueinander und damit gleichzeitig statt.

Gemäß einer vorteilhaften Ausgestaltung der Erfindung sind die Verbindungsgeräte nicht nur mit einer ersten Industriebus-Schnittstelle versehen, sondern verfügen darüber hinaus über eine zweite Industriebus-Schnittstelle, über die zweite Industriebus-Eingangs- bzw. Industriebus-Ausgangsdaten versendet bzw. empfangen werden können. Die zweiten Industriebus-Eingangs- bzw. Industriebus-Ausgangsdaten werden dabei entweder mit demselben, ersten Industriebusprotokoll übertragen wie die ersten Industriebus-Eingangs- bzw. Industriebus-Ausgangsdaten, oder mit einem davon abweichenden zweiten Industriebusprotokoll. Die Zahl der vorhandenen Industriebus-Schnittstellen und insbesondere die Zahl der gleichzeitig übertragbaren Industriebusprotokolle ist darüber hinaus unter Berücksichtigung des maximal möglichen Datendurchsatzes beliebig erweiterbar. Ebenso ist die Zahl der an das jeweilige Verbindungsgerät angeschlossenen Feldgeräte beliebig erweiterbar, je nach Art und Anzahl der vorhandenen Industriebus-Schnittstellen. Für die Kommunikation von und zur Leitstelle über den sogenannten Leitstellen-Industriebus ist vorgesehen, dass das erste, zweite und jedes weitere Industriebusprotokoll zu einem der oben genannten komplexeren Protokolltypen gehört, d.h. es ist ein Steuerbusprotokoll oder ein Feldbusprotokoll. Für die Kommunikation von und zum Feldgerät über den sogenannten Feldgeräte-Industriebus können darüber hinaus auch Gerätebusprotokolle und/oder Sensorbusprotokolle sowie proprietäre Bediengeräteprotokolle verwendet werden, je nach Art des Feldgerätes. Das Feldgerät kann insbesondere eine Aktoreinheit, eine Sensoreinheit, ein Vorort-Bediengerät oder ein Fernbediengerät sein.

Durch die in der bevorzugten Ausgestaltung vorgesehene Verwendung von mehreren Industriebusschnittstellen pro Verbindungsgerät wird es über die bereits sehr vorteilhafte Kombination von Energie- und Datenübertragungsleitung hinaus möglich, die Anzahl der zu installierenden Verbindungsgeräte so gering wie möglich zu halten, insbesondere dann, wenn das Verbindungsgerät in der Lage ist, verschiedene Industriebusprotokolle zu verarbeiten. Die Möglichkeit, verschiedene Industriebusprotokolle über ein und dieselbe Energieversorgungsleitung zu übertragen, erlaubt es, die gesamte vorhandene Datenkommunikation innerhalb der industriellen Anlage auf die Übertragung per Versorgungsleitung umzustellen, selbst wenn eine Multibus-Architektur vorliegen sollte, ohne dass ein Wechsel in den Industriebusprotokollen und dadurch eventuell sogar ein Austausch von Feldbusgeräten nötig wird. Dabei kann stets dieselbe Art von Verbindungsgerät eingesetzt werden, was den Aufwand für die Planung, Installation und Wartung erheblich reduziert.

Die industrielle Anlage, in der die erfindungsgemäßen Verbindungsgeräte eingesetzt werden, ist bevorzugt ein Kraftwerk, eine Pumpstation oder ein Energieverteilsystem. Die räumliche Entfernung zwischen der Leitstelle und dem mindestens einen Feldgerät beträgt in derartigen Anlagen zwischen 50 Metern und 2 Kilometern. Als Trägerfrequenzverfahren wird bevorzugt ein Verfahren nach dem Powerline-Standard verwendet.

Um zu gewährleisten, dass kein fremdes, an die Energieversorgungsleitung angeschlossenes Gerät die in Energiebus-Eingangs- und Energiebus-Ausgangsdaten umgewandelten Informationen widerrechtlich auslesen kann, wird zwischen den Verbindungsgeräten eine Sicherheitskennung ausgetauscht, bevor Energiebus-Daten versendet werden. Das Verbindungsgerät, welches zum Empfang von Energiebus-Eingangsdaten bereit ist, versendet die Sicherheitskennung, und das Verbindungsgerät, welches die entsprechenden Energiebus-Ausgangsdaten versenden will, wartet damit, bis die Sicherheitskennung von ihm empfangen wurde.

Mögliche Ausgestaltungen der Erfindungen werden im Folgenden deutlich in Verbindung mit der Beschreibung der beigefügten Figuren, wobei diese zeigen:
- Fig. 1: ein Verbindungsgerät zum Versenden von Energiebus-Ausgangsdaten,
- Fig. 2: ein Verbindungsgerät zum Empfangen von Energiebus-Eingangsdaten,
- Fig. 3: ein Verbindungsgerät zum Versenden und Empfangen von Energiebus-Eingangs- bzw. -Ausgangsdaten für sich unterscheidende Industriebusprotokolle,
- Fig. 4: das Verbindungsgerät aus Fig. 3, welches jedoch zwei gleiche Industriebusschnittstellen enthält,
- Fig. 5: ein Schema der erfindungsgemäßen Schichtenstruktur der Datenübertragung über die Energieversorgungsleitung,
- Fig. 6: ein Beispiel einer industriellen Anlage.

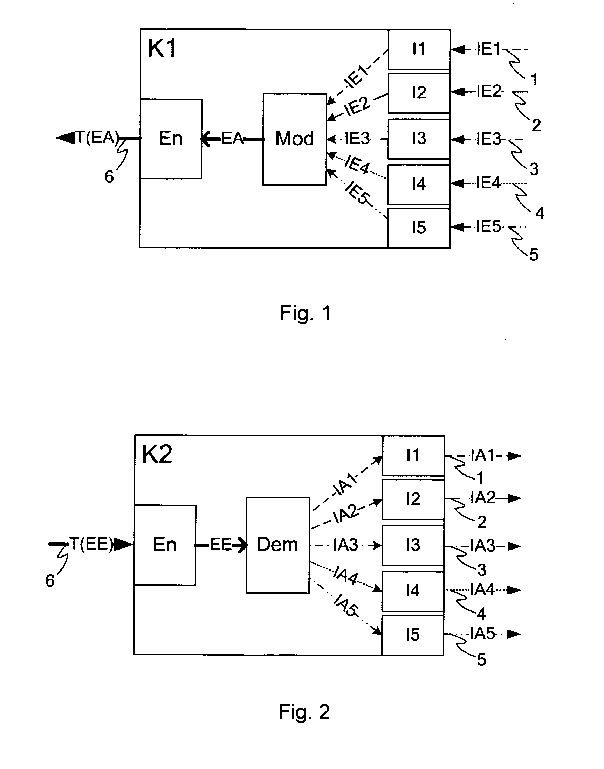

In Fig. 1 ist ein Verbindungsgerät K1 zu sehen, welches über fünf Industriebusschnittstellen I1, I2, I3, I4, I5 verfügt zum Empfang von zugehörigen ersten bis fünften Industriebus-Eingangsdaten, IE1bis IE5. Die ersten bis fünften Industriebus-Eingangsdaten IE1 bis IE5 werden jeweils mit einem von fünf verschiedenen Industriebusprotokollen über einen der zugehörigen Industriebusse 1 bis 5 übertragen. Die Verschiedenartigkeit der Industriebusprotokolle wird in den Figuren durch die fünf unterschiedlichen Linienarten der Eingangspfeile angedeutet. Die Industriebusschnittstellen I1 bis I5 leiten die jeweils empfangenen Industriebus-Eingangsdaten IE1 bis IE5 an Modulationsmittel Mod weiter, wo sie sämtlich auf ein Industrial-Ethernet-Protokoll (IEP) aufmoduliert werden. Daraus entstehen erste bis fünfte Energiebus-Ausgangsdaten EA1 bis EA5. Die Modulation kann auch vereinfacht geschrieben werden als EA1=Mod(IEP, IE1), EA2=Mod(IEP, IE2) usw.. Alle Energiebus-Ausgangsdaten ergeben zusammen ein Energiebus-Ausgangssignal EA={EA1, EA2, EA3, EA4, EA5}. Dieses Energiebus-Ausgangssignal EA wird von den Modulationsmitteln Mod an Energie-Kommunikationsmittel En weitergeleitet. Die Energie-Kommunikationsmittel En modulieren das Energiebus-Ausgangssignal EA zum Versenden auf der angeschlossenen Energieversorgungsleitung 6 mittels eines Trägerfrequenzverfahrens T auf ein Stromsignal auf.

Das in Fig. 2 dargestellte Verbindungsgerät K2 verfügt über Energie-Kommunikationsmittel En, die zum Empfangen und Extrahieren eines, mittels eines Trägerfrequenzverfahrens T auf der Energieversorgungsleitung 6 übertragenen Energiebus-Eingangssignals EE ausgelegt sind. Das Energiebus-Eingangssignal EE enthält insgesamt fünf verschiedene Arten von Energiebus-Eingangsdaten, EE={EE1, EE2, EE3, EE4, EE5}. Demodulationsmittel Dem extrahieren aus dem Energiebus-Eingangssignal EE bzw. aus den einzelnen Energiebus-Eingangsdaten EE1 bis EE5 jeweils zugehörige auf das Industrial-Ethernet-Protokoll aufmodulierte Industriebus-Ausgangsdaten IA1 bis IA5 und gibt die Industriebus-Ausgangsdaten an jeweilige Industriebusschnittstellen I1 bis I5 weiter zur Ausgabe auf dem jeweils zugehörigen Industriebus 1 bis 5.

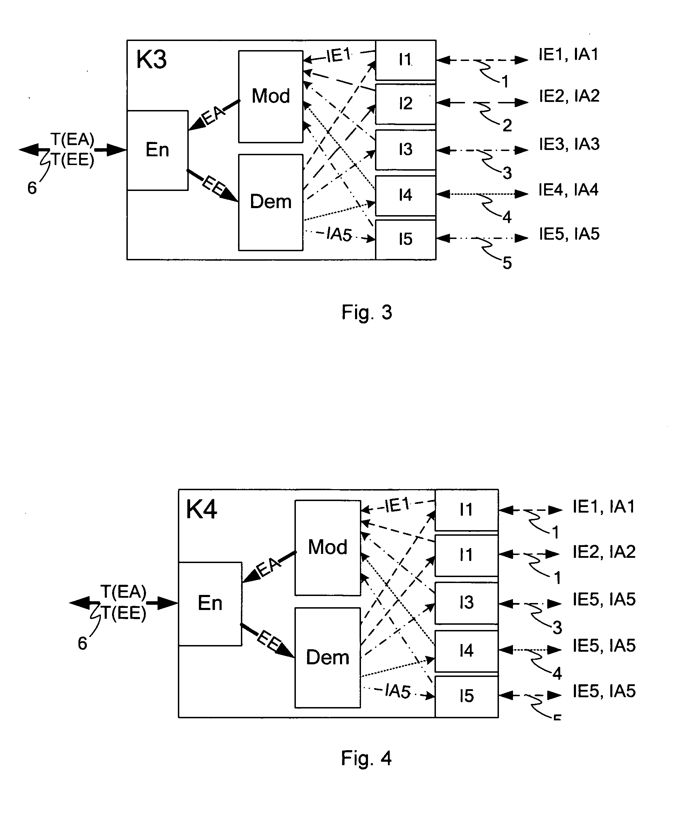

Während das Verbindungsgerät K1 ausschließlich zum Einkoppeln von Daten von den Industriebussen 1 bis 5 auf der Energieversorgungsleitung 6 vorgesehen ist und das Verbindungsgerät K2 ausschließlich zum Auskoppeln von Daten in umgekehrter Richtung , ist das Verbindungsgerät K3 aus Fig. 3 zu beidem in der Lage und verfügt deshalb sowohl über die Modulations- als auch die Demodulationsmittel Mod und Dem. Die Industriebusschnittstellen I1 bis I5 und die Energie-Kommunikationsmittel En sind hier jeweils für eine bidirektionale Kommunikation ausgelegt. Mit anderen Worten vereint das Verbindungsgerät K3 die Funktionalitäten der Verbindungsgeräte K1 und K2.

Das Verbindungsgerät K4 nach Fig. 4 unterscheidet sich von dem Verbindungsgerät K3 lediglich darin, dass die Industriebusschnittstelle I1 zweimal vorhanden ist, während es keine Industriebusschnittstelle I2 gibt. Dementsprechend werden die Industriebus-Eingangsdaten IE1 und IE2 und die Industriebus-Ausgangsdaten IA1 und IA2 mit ein und demselben Industriebusprotokoll übertragen, jedoch innerhalb des Verbindungsgerätes K4 ebenso wie die übrigen Eingangs- und Ausgangsdaten wie jeweils zwei voneinander getrennte Eingangs- und Ausgangs-Datenfolgen behandelt.

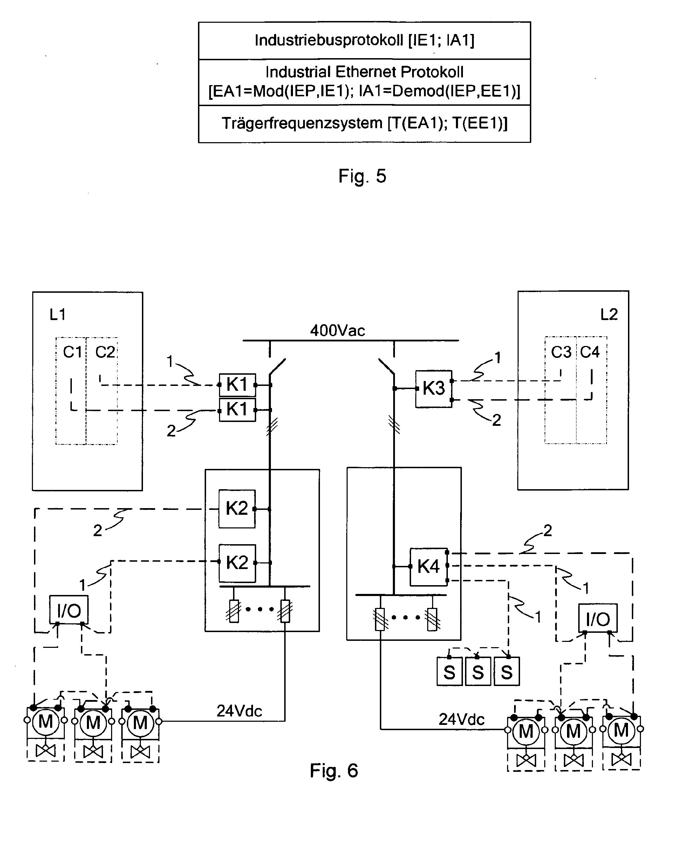

Fig. 5 verdeutlicht die Schichtenstruktur der über die Energieversorgungsleitung 6 erfolgenden Datenübertragung. Auf ein Trägerfrequenzsystem ist ein Industrial-Ethernet Protokoll aufgesetzt, und darüber liegend werden die verschiedenen Industriebusprotokolle aufmoduliert. Die Art der zu übertragenen Daten ist zu jeder Schicht in Klammern hinzugefügt.

In der industriellen Anlage nach Fig. 6 sind zwei Leitstellen L1 und L2 vorhanden, die mit jeweils einer gewissen Anzahl an Feldgeräten, hier Fernbediengeräten I/O, Aktoreinheiten bestehend aus Motoren M und zugehörigen Ventilen sowie Sensoreinheiten S, kommunizieren. Die Kommunikation erfolgt über zwei verschiedene Industriebusse: einen ersten Industriebus 1, bei dem die Daten mit einem Feldbusprotokoll übertragen werden, beispielweise Foundation Fieldbus, Profinet oder Profibus und einem zweiten Industriebus 2, auf dem ein proprietäres Bediengeräteprotokoll gefahren wird. In der Leitstelle L1 ist eine erste Rechnereinheiten C1 über den ersten Industriebus 1 mit einem Verbindungsgerät vom Typ K1 verbunden, und eine zweite Rechnereinheit C2 ist über den zweiten Industriebus 2 mit einem weiteren Verbindungsgerät vom Typ K1 verbunden. Die beiden Verbindungsgeräte vom Typ K1 koppeln die von den Rechnereinheiten C1 bzw. C2 versendeten Steuerbefehle in Form von Industriebus-Eingangsdaten nach der oben beschriebenen zweifachen Modulation mit Industrial-Ethernet-Protokoll und Trägerfrequenzverfahren auf eine 400 V Wechselstrom-Energieversorgungsleitung ein.

Auf der Feldgeräteseite sind zwei entsprechende Verbindungsgeräte vom Typ K2 vorhanden, welches die von den Verbindungsgeräten vom Typ K1 eingekoppelten Daten durch zweifache Demodulation wieder von der 400 V Wechselstrom-Energieversorgungsleitung auskoppeln und an zugehörige Feldgeräte liefern. Dabei werden die Industriebus-Ausgangsdaten des ersten Industriebus 1 an die Motoren M der Aktoreinheiten und das Fernbediengerät I/O gesendet, und die des zweiten Industriebus 2 werden an die zu den Motoren M der Aktoreinheiten gehörenden, nicht gesondert dargestellten Vorort-Bediengeräten sowie das Fernbediengerät I/O gesendet. Zwischen der Leitstelle L1 und den Verbindungsgeräten vom Typ K1 ist nur eine kurze Entfernung von wenigen Metern durch die Industriebusse 1 und 2 zu überwinden. Dasselbe gilt für die Entfernung zwischen den Verbindungsgeräten vom Typ K2 und den Feldgeräten. Dagegen ist die Entfernung zwischen den K1- und K2-Geräten vergleichsweise lang mit mehreren Hundert Metern. Die Feldgeräte werden über die 400 V Wechselstrom-Versorgungsleitung nicht nur mit Daten sondern auch mit Energie versorgt, was durch die Transformation auf eine 24 V Gleichstrom-Versorgungsleitung angedeutet ist, welche an die Motoren M angeschlossen ist.

Auf der Seite der zweiten Leitstelle L2 und der zugehörigen Feldgeräte, wird ein bidirektionales Verbindungsgerät vom Typ K3 für das Einkoppeln der Daten auf die 400 V Energieversorgungsleitung verwendet und ein bidirektionales Verbindungsgerät vom Typ K4 für das Auskoppeln. Dementsprechend können nicht nur Steuerbefehle von der Leitstelle an die Feldgeräte versendet werden, sondern es ist auch ein Datenfluss in umgekehrter Richtung möglich, beispielsweise zur Übertragung von Status- und Messinformationen von den Feldgeräten an die Leitstelle. Dementsprechend sind unter den Feldgeräten auch Sensoren S vorgesehen, welche ihre Daten per Feldbusprotokoll und damit über den ersten Industriebus 1 ausgeben.

Neben den in den Figuren dargestellten Ausführungsbeispielen sind weitere Ausgestaltungen der Erfindung denkbar. Beispielsweise können die Verbindungsgeräte die Industriebus-Ausgangsdaten in ein anderes Industriebusprotokoll umwandeln als das in dem sie ursprünglich empfangen wurden. Es ist auch denkbar, Verbindungsgeräte vom Typ K1 und vom Typ K2 direkt nebeneinander zu betreiben und an ein und denselben Industriebus anzuschließen, um somit eine bidirektionale Kommunikation zu ermöglichen. Die Zahl der Verbindungsgeräte in Fig. 6 ist beliebig erweiterbar, je nach Anzahl der an die Energieversorgungsleitung anzuschließenden Rechnereinheiten in den Leitstellen bzw. je nach Anzahl der Feldgeräte und Art der anzuschließenden Industriebusse.

## Patentansprüche

1. Verbindungsgerät zur Anwendung in einer industriellen Anlage, welches an eine Energieversorgungsleitung anschließbar ist und über mindestens eine erste Industriebusschnittstelle (I1) zum Empfangen von mittels eines ersten Industriebusprotokolls übertragenen ersten Industriebus-Eingangsdaten (IE1) verfügt,
**gekennzeichnet durch**
• eine zweite Industriebusschnittstelle (I2) zum Empfangen von zweiten Industriebus-Eingangsdaten (IE2) mittels eines zweiten Industriebusprotokolls,
• Modulationsmittel (Mod) zur Erzeugung von ersten Energiebus-Ausgangsdaten (EA1) **durch** Aufmodulation der ersten Industriebus-Eingangsdaten (IE1) auf ein Industrial-Ethernet-Protokoll (IEP) und zur Erzeugung von zweiten Energiebus-Ausgangsdaten (EA2) **durch** Aufmodulation der zweiten Industriebus-Eingangsdaten (IE2) auf das Industrial-Ethernet-Protokoll (IEP), wobei alle Energiebus-Ausgangsdaten zusammen ein Energiebus-Ausgangssignal (EA) ergeben,
• Energie-Kommunikationsmittel (En) zum Aufmodulieren des Energiebus-Ausgangssignals (EA) mittels eines Trägerfrequenzverfahrens (T) auf ein Stromsignal zum Versenden des Energiebus-Ausgangssignals (EA) auf der Energieversorgungsleitung (6).

2. Verbindungsgerät (K1, K3, K4) nach Anspruch 1, wobei die Energie-Kommunikationsmittel (En) ausgelegt sind zum Versenden der ersten und/oder zweiten Energiebus-Ausgangsdaten (EA1, EA2) erst dann, wenn eine Sicherheitskennung eines an die Energieversorgungsleitung (6) angeschlossenen Empfangsgerätes vorliegt.

3. Verbindungsgerät zur Anwendung in einer industriellen Anlage, welches an eine Energieversorgungsleitung anschließbar ist und über mindestens eine erste Industriebusschnittstelle (I1) zum Versenden von mittels eines ersten Industriebusprotokolls zu übertragenen ersten Industriebus-Ausgangsdaten (IA1) mittels eines ersten Industriebusprotokolls verfügt,
**gekennzeichnet durch**
• eine zweite Industriebusschnittstelle (I2) zum Versenden von zweiten Industriebus-Ausgangsdaten (IA2) mittels eines zweiten Industriebusprotokolls,
• Energie-Kommunikationsmittel (En) zum Empfangen und Extrahieren eines mittels eines Trägerfrequenzverfahrens (T) über die Energieversorgungsleitung (6) übertragenen Energiebus-Eingangssignals (EE), welches erste und zweite Energiebus-Eingangsdaten (EE1, EE2) enthält,
• Demodulationsmittel (Dem) zum Extrahieren der auf ein Industrial-Ethernet-Protokoll (IEP) aufmodulierten ersten und zweiten Industriebus-Ausgangsdaten (IA1, IA2) aus den ersten und zweiten Energiebus-Eingangsdaten (EE1, EE2) und zur Weitergabe der Industriebus-Ausgangsdaten (IA1, IA2) an die jeweilige Industriebusschnittstelle (I1, I2) zur Ausgabe auf einem jeweils zugehörigen Industriebus (1, 2).

4. Verbindungsgerät nach Anspruch 3, wobei die Energie-Kommunikationsmittel (En) ausgelegt sind zum Versenden einer Sicherheitskennung auf der Energieversorgungsleitung (6).

5. Verbindungsgerät zur Anwendung in einer industriellen Anlage, welches an eine Energieversorgungsleitung anschließbar ist und über mindestens eine erste Industriebusschnittstelle (I1) zum Empfangen von ersten Industriebus-Eingangsdaten (IE1) und zum Versenden von ersten Industriebus-Ausgangsdaten (IA1) mittels eines ersten Industriebusprotokolls verfügt,
**gekennzeichnet durch**
• eine zweiten Industriebusschnittstelle (I2) zum Empfangen von zweiten Industriebus-Eingangsdaten (IE2) und zum Versenden von zweiten Industriebus-Ausgangsdaten (IA2) mittels eines zweiten Industriebusprotokolls,
• Modulationsmittel (Mod) zur Erzeugung von ersten Energiebus-Ausgangsdaten (EA1) **durch** Aufmodulation der ersten Industriebus-Eingangsdaten (IE1) auf ein Industrial-Ethernet-Protokoll (IEP) und zur Erzeugung von zweiten Energiebus-Ausgangsdaten (EA2) **durch** Aufmodulation der zweiten Industriebus-Eingangsdaten (IE2) auf das Industrial-Ethernet-Protokoll (IEP), wobei alle Energiebus-Ausgangsdaten zusammen ein Energiebus-Ausgangssignal (EA) ergeben,
• Energie-Kommunikationsmittel (En) zum Aufmodulieren des Energiebus-Ausgangssignals (EA) mittels eines Trägerfrequenzverfahrens (T) auf ein Stromsignal zum Versenden des Energiebus-Ausgangssignals (EA) auf der Energieversorgungsleitung (6), und zum Empfangen und Extrahieren eines mittels des Trägerfrequenzverfahrens (T) über die Energieversorgungsleitung (6) übertragenen Energiebus-Eingangssignals (EE), welches erste und zweite Energiebus-Eingangsdaten (EE1, EE2) enthält,
• Demodulationsmittel (Dem) zum Extrahieren der auf das Industrial-Ethernet-Protokoll (IEP) aufmodulierten ersten und zweiten Industriebus-Ausgangsdaten (IA1) aus den ersten und zweiten Energiebus-Eingangsdaten (EE1, EE2) und zur Weitergabe der Industriebus-Ausgangsdaten (IA1, IA2), an die jeweilige Industriebusschnittstelle (I1, I2) zur Ausgabe auf einem jeweils zugehörigen Industriebus (1, 2).

6. Verbindungsgerät nach Anspruch 5, wobei die Energie-Kommunikationsmittel (En) ausgelegt sind zum Versenden einer eigenen Sicherheitskennung auf der Energieversorgungsleitung (6) und zum Versenden der ersten und/oder zweiten Energiebus-Ausgangsdaten (EA1, EA2) erst dann, wenn eine Sicherheitskennung eines an die Energieversorgungsleitung (6) angeschlossenen Empfangsgerätes vorliegt.

7. System zur Signalübertragung zwischen einer Leitstelle und mindestens einem Feldgerät in einer industriellen Anlage umfassend eine Energieversorgungsleitung zur Versorgung des mindestens einen Feldgerätes mit elektrischer Energie,
**dadurch gekennzeichnet, dass**
das System weiterhin umfasst ein erstes Verbindungsgerät (K1, K3) nach einem der Ansprüche 1 und 2 oder 5 und 6, welches an die Energieversorgungsleitung (6) angeschlossen ist und welches über mindestens einen ersten Leitstellen-Industriebus (1) mit der Leitstelle verbunden ist, und ein zweites Verbindungsgerät (K2, K4) nach einem der Ansprüche 3 und 4 oder 5 und 6, welches an die Energieversorgungsleitung (6) angeschlossen ist und welches über mindestens einen ersten Feldgeräte-Industriebus (1) mit dem mindestens einen Feldgerät (I/O) verbunden ist.

8. System nach Anspruch 7, mit einem weiteren Feldgerät (M), welches über die Energieversorgungsleitung (6) mit elektrischer Energie versorgt wird, wobei das zweite Verbindungsgerät (K2, K4) über den mindestens ersten Feldgeräte-Industriebus (1) und/oder über mindestens einen weiteren Feldgeräte-Industriebus (2) mit dem weiteren Feldgerät (M) verbunden ist.

9. System nach Anspruch 8, mit einem weiteren Verbindungsgerät (K2), welches an die Energieversorgungsleitung (6) angeschlossen ist und welches über den mindestens ersten Feldgeräte-Industriebus (1) und über den mindestens einen weiteren Feldgeräte-Industriebus (2) mit dem weiteren Feldgerät (M) verbunden ist.

10. System nach einem der Ansprüche 7 bis 9, wobei die Kommunikation auf dem mindestens ersten Leitstellen-Industriebus (1) und dem mindestens ersten Feldgeräte-Industriebus (1) mit demselben Industriebusprotokoll stattfindet.

11. System nach einem der Ansprüche 7 bis 10, wobei die Kommunikation auf dem mindestens ersten Leitstellen-Industriebus (1) oder dem mindestens ersten Feldgeräte-Industriebus (1) oder dem mindestens einen weiteren Feldgeräte-Industriebus (2) mit einem Steuerbusprotokoll oder einem Feldbusprotokoll stattfindet.

12. System nach einem der Ansprüche 7 bis 11, wobei die Kommunikation auf dem mindestens ersten Feldgeräte-Industriebus (1) oder dem mindestens einen weiteren Feldgeräte-Industriebus (2) mit einem Gerätebusprotokoll oder mit einem Sensorbusprotokoll oder mit einem Bediengeräteprotokoll stattfindet.

13. Verfahren zur Signalhinübertragung zwischen einer Leitstelle und mindestens einem Feldgerät in einer industriellen Anlage, wobei die industrielle Anlage eine Energieversorgungsleitung zur Versorgung des mindestens einen Feldgerätes mit elektrischer Energie umfasst, **dadurch gekennzeichnet, dass**
• erste, mit einem ersten Industriebusprotokoll über einen zugehörigen Industriebus (1) übertragene Industriebus-Eingangsdaten (IE1) empfangen werden,
• zweite, mit einem zweiten Industriebusprotokoll über einen zugehörigen Industriebus (2) übertragene Industriebus-Eingangsdaten (IE2) empfangen werden,
• erste Energiebus-Ausgangsdaten (EA1) durch Aufmodulation der ersten Industriebus-Eingangsdaten (IE1) auf ein Industrial-Ethernet-Protokoll (IEP) erzeugt werden,
• zweite Energiebus-Ausgangsdaten (EA2) durch Aufmodulation der zweiten Industriebus-Eingangsdaten (IE2) auf das Industrial-Ethernet-Protokoll (IEP) erzeugt werden, wobei alle Energiebus-Ausgangsdaten zusammen ein Energiebus-Ausgangssignal (EA) ergeben , und
• das Energiebus-Ausgangssignal (EA) mittels eines Trägerfrequenzverfahrens (T) auf ein Stromsignal aufmoduliert wird zum Versenden des Energiebus-Ausgangssignals (EA) auf der Energieversorgungsleitung (6).

14. Verfahren zur Signalrückübertragung zwischen einer Leitstelle und mindestens einem Feldgerät in einer industriellen Anlage, wobei die industrielle Anlage eine Energieversorgungsleitung zur Versorgung des mindestens einen Feldgerätes mit elektrischer Energie umfasst, **dadurch gekennzeichnet, dass**
• ein mittels eines Trägerfrequenzverfahrens (T) über die Energieversorgungsleitung (6) übertragenes Energiebus-Eingangssignal (EE) empfangen und extrahiert wird, wobei das Energiebus-Eingangssignal (EE) erste und zweite Energiebus-Eingangsdaten (EE1, EE2) enthält
• mit einem ersten Industriebusprotokoll zu versendende erste Industriebus-Ausgangsdaten (IA1) aus den ersten Energiebus-Eingangsdaten (EE1) durch Extrahieren aus einem Industrial-Ethernet-Protokoll (IEP) gewonnen werden,
• mit einem zweiten Industriebusprotokoll zu versendende zweite Industriebus-Ausgangsdaten (IA2) aus den zweiten Energiebus-Eingangsdaten (EE2) durch Extrahieren aus dem Industrial-Ethernet-Protokoll (IEP) gewonnen werden, und
• die Industriebus-Ausgangsdaten (IA1, IA2) an die jeweilige Industriebusschnittstelle (I1, I2) zur Ausgabe auf einem jeweils zugehörigen Industriebus (1, 2) weitergegeben werden.

15. Verfahren zur Signalübertragung zwischen einer Leitstelle und mindestens einem Feldgerät in einer industriellen Anlage, wobei die industrielle Anlage eine Energieversorgungsleitung zur Versorgung des mindestens einen Feldgerätes mit elektrischer Energie umfasst, **dadurch gekennzeichnet, dass** die Verfahren nach den Ansprüchen 13 und 14 parallel zueinander durchgeführt werden.

## Claims

1. Connecting device for use in an industrial installation, which device can be connected to an energy supply line and has at least one first industrial bus interface (I1) for receiving first industrial bus input data (IE1) transmitted using a first industrial bus protocol,
**characterized by**
• a second industrial bus interface (12) for receiving second industrial bus input data (IE2) using a second industrial bus protocol,
• modulation means (Mod) for producing first energy bus output data (EA1) by modulating the first industrial bus input data (IE1) onto an industrial Ethernet protocol (IEP) and for producing second energy bus output data (EA2) by modulating the second industrial bus input data (IE2) onto the industrial Ethernet protocol (IEP), all energy bus output data together resulting in an energy bus output signal (EA),
• energy communication means (En) for modulating the energy bus output signal (EA) onto a current signal using a carrier frequency method (T) for transmitting the energy bus output signal (EA) on the energy supply line (6).

2. Connecting device (K1, K3, K4) according to Claim 1, the energy communication means (En) being designed to transmit the first and/or second energy bus output data (EA1, EA2) only when a security identifier of a receiving device connected to the energy supply line (6) is available.

3. Connecting device for use in an industrial installation, which device can be connected to an energy supply line and has at least one first industrial bus interface (I1) for transmitting first industrial bus output data (IA1), to be transmitted using a first industrial bus protocol, using a first industrial bus protocol,
**characterized by**
• a second industrial bus interface (12) for transmitting second industrial bus output data (IA2) using a second industrial bus protocol,
• energy communication means (En) for receiving and extracting an energy bus input signal (EE) which is transmitted via the energy supply line (6) using a carrier frequency method (T) and contains first and second energy bus input data (EE1, EE2),
• demodulation means (Dem) for extracting the first and second industrial bus output data (IA1, IA2) modulated onto an industrial Ethernet protocol (IEP) from the first and second energy bus input data (EE1, EE2) and for forwarding the industrial bus output data (IA1, IA2) to the respective industrial bus interface (I1, 12) for output on a respectively associated industrial bus (1, 2).

4. Connecting device according to Claim 3, the energy communication means (En) being designed to transmit a security identifier on the energy supply line (6).

5. Connecting device for use in an industrial installation, which device can be connected to an energy supply line and has at least one first industrial bus interface (I1) for receiving first industrial bus input data (IE1) and for transmitting first industrial bus output data (IA1) using a first industrial bus protocol,
**characterized by**
• a second industrial bus interface (12) for receiving second industrial bus input data (IE2) and for transmitting second industrial bus output data (IA2) using a second industrial bus protocol,
• modulation means (Mod) for producing first energy bus output data (EA1) by modulating the first industrial bus input data (IE1) onto an industrial Ethernet protocol (IEP) and for producing second energy bus output data (EA2) by modulating the second industrial bus input data (IE2) onto the industrial Ethernet protocol (IEP), all energy bus output data together resulting in an energy bus output signal (EA),
• energy communication means (En) for modulating the energy bus output signal (EA) onto a current signal using a carrier frequency method (T) for transmitting the energy bus output signal (EA) on the energy supply line (6) and for receiving and extracting an energy bus input signal (EE) which is transmitted via the energy supply line (6) using the carrier frequency method (T) and contains first and second energy bus input data (EE1, EE2),
• demodulation means (Dem) for extracting the first and second industrial bus output data (IA1) modulated onto the industrial Ethernet protocol (IEP) from the first and second energy bus input data (EE1, EE2) and for forwarding the industrial bus output data (IA1, IA2) to the respective industrial bus interface (I1, 12) for output on a respectively associated industrial bus (1, 2).

6. Connecting device according to Claim 5, the energy communication means (En) being designed to transmit their own security identifier on the energy supply line (6) and to transmit the first and/or second energy bus output data (EA1, EA2) only when a security identifier of a receiving device connected to the energy supply line (6) is available.

7. System for transmitting signals between a control center and at least one field device in an industrial installation, comprising an energy supply line for supplying the at least one field device with electrical energy,
**characterized in that**
the system also comprises a first connecting device (K1, K3) according to either of Claims 1 and 2 or 5 and 6, which is connected to the energy supply line (6) and is connected to the control center via at least one first control center industrial bus (1), and a second connecting device (K2, K4) according to either of Claims 3 and 4 or 5 and 6, which is connected to the energy supply line (6) and is connected to the at least one field device (I/O) via at least one first field device industrial bus (1).

8. System according to Claim 7, having a further field device (M) which is supplied with electrical energy via the energy supply line (6), the second connecting device (K2, K4) being connected to the further field device (M) via the at least first field device industrial bus (1) and/or via at least one further field device industrial bus (2).

9. System according to Claim 8, having a further connecting device (K2) which is connected to the energy supply line (6) and is connected to the further field device (M) via the at least first field device industrial bus (1) and via the at least one further field device industrial bus (2).

10. System according to one of Claims 7 to 9, the communication on the at least first control center industrial bus (1) and the at least first field device industrial bus (1) taking place using the same industrial bus protocol.

11. System according to one of Claims 7 to 10, the communication on the at least first control center industrial bus (1) or the at least first field device industrial bus (1) or the at least one further field device industrial bus (2) taking place using a control bus protocol or a field bus protocol.

12. System according to one of Claims 7 to 11, the communication on the at least first field device industrial bus (1) or the at least one further field device industrial bus (2) taking place using a device bus protocol or a sensor bus protocol or an operating device protocol.

13. Method for forward signal transmission between a control center and at least one field device in an industrial installation, the industrial installation comprising an energy supply line for supplying the at least one field device with electrical energy, **characterized in that**
• first industrial bus input data (IE1) transmitted via an associated industrial bus (1) using a first industrial bus protocol are received,
• second industrial bus input data (IE2) transmitted via an associated industrial bus (2) using a second industrial bus protocol are received,
• first energy bus output data (EA1) are produced by modulating the first industrial bus input data (IE1) onto an industrial Ethernet protocol (IEP),
• second energy bus output data (EA2) are produced by modulating the second industrial bus input data (IE2) onto the industrial Ethernet protocol (IEP), all energy bus output data together resulting in an energy bus output signal (EA), and
• the energy bus output signal (EA) is modulated onto a current signal using a carrier frequency method (T) for transmitting the energy bus output signal (EA) on the energy supply line (6).

14. Method for reverse signal transmission between a control center and at least one field device in an industrial installation, the industrial installation comprising an energy supply line for supplying the at least one field device with electrical energy, **characterized in that**
• an energy bus input signal (EE) transmitted via the energy supply line (6) using a carrier frequency method (T) is received and extracted, the energy bus input signal (EE) containing first and second energy bus input data (EE1, EE2),
• first industrial bus output data (IA1) to be transmitted using a first industrial bus protocol are obtained from the first energy bus input data (EE1) by means of extraction from an industrial Ethernet protocol (IEP),
• second industrial bus output data (IA2) to be transmitted using a second industrial bus protocol are obtained from the second energy bus input data (EE2) by means of extraction from the industrial Ethernet protocol (IEP), and
• the industrial bus output data (IA1, IA2) are forwarded to the respective industrial bus interface (I1, 12) for output on a respectively associated industrial bus (1, 2).

15. Method for transmitting signals between a control center and at least one field device in an industrial installation, the industrial installation comprising an energy supply line for supplying the at least one field device with electrical energy, **characterized in that** the methods according to Claims 13 and 14 are carried out in parallel with one another.

## Revendications

1. Appareil de connexion destiné à être utilisé dans une installation industrielle et qui peut être relié à une ligne d'alimentation en énergie et comporte une première interface de bus industriel destinée à recevoir des premières données d'entrée de bus industriel (IE1) transmises au moyen d'au moins un premier protocole de bus industriel,
**caractérisé par**
- une seconde interface de bus industriel (12) destinée à recevoir des secondes données d'entrée de bus industriel (IE2) au moyen d'un second protocole de bus industriel,
- des moyens de modulation (Mod) destinés à générer des premières données de sortie de bus d'énergie (EA1) par surmodulation des premières données d'entrée de bus industriel (IE1) sur un protocole Ethernet industriel (IEP) et à générer des secondes données de sortie de bus d'énergie (EA2) par surmodulation des secondes donnée d'entrée de bus industriel (IE2) sur le protocole Ethernet industriel (IEP), dans lequel toutes les données de sortie de bus d'énergie produisent ensemble un signal de sortie de bus d'énergie (EA);
- des moyens de communication d'énergie (En) destinés à surmoduler le signal de sortie de bus d'énergie (EA) au moyen d'un procédé de fréquence porteuse (T) sur un signal de courant pour émettre le signal de sortie de bus d'énergie (EA) sur la ligne d'alimentation en énergie (6).

2. Appareil de connexion (K1, K3, K4) selon la revendication 1, dans lequel les moyens de communication d'énergie (En) sont conçus pour n'émettre les premières et/ou secondes données de sortie de bus d'énergie (EA1, EA2) que lorsqu'un identifiant de sécurité d'un appareil récepteur relié à la ligne d'alimentation en énergie (6) est présent.

3. Appareil de connexion destiné à être utilisé dans une installation industrielle, qui peut être relié à une ligne d'alimentation en énergie et comporte au moins une première interface de bus industriel (I1) destinée à émettre des données de sortie de bus industriel (IA1) transmises au moyen d'un premier protocole de bus industriel,
**caractérisé par**
- une seconde interface de bus industriel (12) destinée à émettre des secondes données de sortie de bus industriel (IA2) au moyen d'un second protocole de bus industriel,
- des moyens de communication d'énergie (En) destinés à recevoir et à extraire un signal d'entrée de bus d'énergie (EE) transmis au moyen d'un procédé de fréquence porteuse (T) par l'intermédiaire de la ligne d'alimentation en énergie (6), lequel signal contient des premières et secondes données d'entrée de bus d'énergie (EE1, EE2),
- des moyens de démodulation (Dem) destinés à extraire les premières et secondes données de sortie de bus industriel (IA1, IA2) surmodulées sur un protocole Ethernet industriel (IEP) à partir des premières et secondes données d'entrée de bus d'énergie (EE1, EE2) et à réacheminer les données de sortie de bus industriel (IA1, IA2) vers l'interface de bus industriel respective (I1, 12) afin de les délivrer sur un bus industriel (1, 2) correspondant respectif.

4. Appareils de connexion selon la revendication 3, dans lequel les moyens de communication d'énergie (En) sont conçus pour émettre un identifiant de sécurité sur la ligne d'alimentation en énergie (6).

5. Appareil de connexion destiné à être utilisé dans une installation industrielle, qui peut être relié à une ligne d'alimentation en énergie et comporte au moins une première interface de bus industriel (I1) destinée à recevoir des premières données d'entrée de bus industriel (IE1) et à émettre des premières données de sortie de bus industriel (IA1) au moyen d'un premier protocole de bus industriel,
**caractérisé par**
- une seconde interface de bus industriel (12) destinée à recevoir des secondes données d'entrée de bus industriel (IE2) et à émettre des secondes données de sortie de bus industriel (IA2) au moyen d'un second protocole de bus industriel,
- des moyens de modulation (Mod) destinés à générer des premières données de sortie de bus industriel (EA1) par surmodulation des premières données d'entrée de bus industriel (IE1) sur un protocole Ethernet industriel (IEP) et à générer des secondes données de sortie de bus d'énergie (EA2) par surmodulation des secondes données de sortie de bus d'énergie (IE2) sur le protocole Ethernet industriel (IEP), dans lequel toutes les données de sortie de bus d'énergie produisent ensemble un signal de sortie de bus d'énergie (EA),
- des moyens de communication d'énergie (En) destinés à surmoduler le signal de sortie de bus d'énergie (EA) au moyen d'un procédé de fréquence porteuse (T) sur un signal de courant afin d'émettre le signal de sortie de bus d'énergie (EA) sur la ligne d'alimentation en énergie (6), et à recevoir et extraire un signal d'entrée de bus d'énergie (EE) transmis au moyen du procédé de fréquence porteuse (T) par l'intermédiaire de la ligne d'alimentation en énergie (6), lequel signal d'entrée contient des premières et secondes données d'entrée de bus d'énergie (EE1, EE2),
- des moyens de démodulation (Dem) destinés à extraire les premières et secondes données de sortie de bus industriel (IA1) surmodulées sur le protocole Ethernet industriel (IEP) des premières et secondes données de bus d'énergie (EE1, EE2) et à réacheminer les données de sortie de bus industriel (IA1, IA2) à l'interface de bus industriel respective (I1, 12) afin de les délivrer sur un bus industriel (1, 2) correspondant respectif.

6. Appareil de connexion selon la revendication 5, dans lequel les moyens de communication d'énergie (En) sont conçus pour émettre un identifiant de sécurité propre sur la ligne d'alimentation en énergie (6) et pour n'émettre les premières et/ou secondes données de sortie de bus d'énergie (EA1, EA2) que lorsqu'un identifiant de sécurité d'un appareil de réception relié à la ligne d'alimentation en énergie (6) est présent.

7. Système de transmission de signal entre un centre de coordination et au moins un appareil de terrain dans une installation industrielle comprenant une ligne d'alimentation en énergie destinée à alimenter l'au moins un appareil de terrain en énergie électrique,
**caractérisé en ce que**
le système comprend en outre un premier appareil de connexion (K1, K3) selon l'une quelconque des revendications 1 et 2 ou 5 et 6, qui est relié à la ligne d'alimentation en énergie (6) et qui est connecté au centre de coordination par l'intermédiaire d'au moins un premier bus industriel de centre de coordination (1), et un second appareil de connexion (K2, K4) selon l'une quelconque des revendications 3 et 4 ou 5 et 6, qui est relié à la ligne d'alimentation en énergie (6) et qui est connecté à au moins un appareil de terrain (I/O) par l'intermédiaire d'au moins un premier bus industriel d'appareil de terrain (1).

8. Système selon la revendication 7, comportant un autre appareil de terrain (M) qui est alimenté en énergie électrique par l'intermédiaire de la ligne d'alimentation en énergie (6), dans lequel le second appareil de connexion (K2, K4) est connecté à l'autre appareil de terrain (M) par l'intermédiaire de l'au moins un premier bus industriel d'appareil de terrain (1) et/ou par l'intermédiaire d'au moins un autre bus industriel d'appareil de terrain (2).

9. Système selon la revendication 8, comportant un autre appareil de connexion (K2) qui est relié à la ligne d'alimentation en énergie (6) et qui est connecté à l'autre appareil de terrain (M) par l'intermédiaire de l'au moins un premier bus industriel d'appareil de terrain (1) et par l'intermédiaire de l'au moins un autre bus industriel d'appareil de terrain (2).

10. Système selon l'une quelconque des revendications 7 à 9, dans lequel la communication se produit avec un même protocole de bus industriel sur l'au moins un premier bus industriel de centre de coordination (1) et sur l'au moins un premier bus industriel d'appareil de terrain (1).

11. Système selon l'une quelconque des revendications 7 à 10, dans lequel la communication se produit sur l'au moins un premier bus industriel de centre de coordination (1) ou sur l'au moins un premier bus industriel d'appareil de terrain (1) ou sur l'au moins un autre bus industriel d'appareil de terrain (2) avec un protocole de bus de commande ou un protocole de bus de terrain.

12. Système selon l'une quelconque des revendications 7 à 11, dans lequel la communication se produit sur l'au moins un premier bus industriel d'appareil de terrain (1) ou sur l'au moins un autre bus industriel d'appareil de terrain (2) avec un protocole de bus d'appareil ou avec un protocole de bus de capteur ou avec un protocole d'appareil utilisateur.

13. Procédé de transmission de signal entre un centre de coordination et au moins un appareil de terrain dans une installation industrielle, dans lequel l'installation industrielle comprend une ligne d'alimentation en énergie destinée à alimenter en énergie électrique l'au moins un appareil de terrain, **caractérisée en ce que**
- des premières données d'entrée de bus industriel (IE1) sont transmises par l'intermédiaire d'un bus industriel correspondant (1) avec un premier protocole de bus industriel,
- des secondes données d'entrée de bus industriel (IE2) transmises par l'intermédiaire d'un bus industriel correspondant (2) sont reçues avec un second protocole de bus industriel,
- des premières données de sortie de bus d'énergie (EA1) sont générées par surmodulation des premières données d'entrée de bus industriel (IE1) sur un protocole Ethernet industriel (IEP),
- des secondes données de sortie de bus d'énergie (EA2) sont générées par surmodulation des secondes données d'entrée de bus industriel (IE2) sur le protocole Ethernet industriel (IEP), dans lequel toutes les données de sortie de bus d'énergie produisent ensemble un signal de sortie de bus d'énergie (EA), et
- le signal de sortie de bus d'énergie (EA) est surmodulé sur un signal de courant au moyen d'un procédé de fréquence porteuse (T) pour émettre le signal de sortie de bus d'énergie (EA) sur la ligne d'alimentation en énergie (6).

14. Procédé transmission de signal entre un centre de coordination et au moins un appareil de terrain dans une installation industrielle, dans lequel l'installation industrielle comprend une ligne d'alimentation en énergie destinée à alimenter en énergie électrique l'au moins un appareil de terrain, **caractérisé en ce que**
- un signal d'entrée de bus d'énergie (EE) transmis au moyen d'un procédé de fréquence porteuse (T) par l'intermédiaire de la ligne d'alimentation en énergie (6) est reçu et extrait, dans lequel le signal d'entrée de bus d'énergie (EE) contient des premières et secondes données d'entrée de bus d'énergie (EE1, EE2),
- des premières données de sortie de bus industriel (IA1) à émettre avec un premier protocole de bus industriel sont obtenues à partir des premières données d'entrée de bus d'énergie (EE1) par extraction à partir d'un protocole Ethernet industriel (IEP),
- des secondes données de sortie de bus industriel (IA2) à émettre avec un second protocole de bus industriel sont obtenues à partir des secondes données d'entrée de bus d'énergie (EE2) par extraction à partir d'un protocole Ethernet industriel (IEP), et
- les données de sortie de bus industriel (IA1, IA2) sont réacheminées vers l'interface de bus industriel respective (I1, 12) afin qu'elles soient délivrées sur le bus industriel (1, 2) respectif correspondant.

15. Procédé de transmission de signal entre un centre de coordination et au moins un appareil de terrain dans une installation industrielle, dans lequel l'installation industrielle comprend une ligne d'alimentation en énergie destinée à alimenter en énergie électrique l'au moins un appareil de terrain, **caractérisé en ce que** les procédés des revendications 13 et 14 sont exécutés en parallèle l'un avec l'autre.
